# EUROPEAN PATENT SPECIFICATION

(11) **EP 1 150 037 B1**
(45) Date of publication and mention of the grant of the patent: **14.12.2005**
(21) Application number: 99954436.4
(22) Date of filing: 08.11.1999
(51) Int. Cl.: F16H 25/24, F16C 29/00

(54) **BALL SCREW**
KUGELSPINDEL
VIS A BILLES

(43) Date of publication of application: 31.10.2001
(73) Proprietor: THK CO., LTD., Shinagawa-ku, Tokyo 141-0031 (JP)
(72) Inventor: Takeda, Ryuji THK Co., Ltd., Tokyo 141-0031 (JP); Nishide, Tetsuhiro THK Co., Ltd., Tokyo 141-0031 (JP); Niwa, Hiroshi THK Co., Ltd., Tokyo 141-0031 (JP); Honma, Mitsuaki THK Co., Ltd., Tokyo 141-0031 (JP)
(74) Representative: Needle, Jacqueline
(86) International application number: PCT/JP1999/006214
(87) International publication number: WO 2001/035002

(56) References cited:
- EP-A- 0 376 164
- GB-A- 2 223 282
- JP-A- 10 030 704
- JP-A- 11 166 608
- JP-U- 6 006 795
- US-A- 2 757 548
- US-A- 3 669 460
- US-A- 4 407 511
- US-A- 4 905 533

## Description

The present invention relates to a ball screw, according to the preamble of claim 1.

As a seal member of a conventional ball screw, there is known seal members mounted at both end portions of a nut (refer to Japanese utility Model JP 6006795U). Each of such seal members has a ring shape and has an inner peripheral surface at which a projection, fitted into a ball rolling groove of a screw shaft, is formed. A slit is formed on the seal member so as to extend from an end surface of the nut facing outside in the axial direction of the nut to an intermediate portion of the seal member. By mounting the seal members at both end portions of the nut, the seal members tightly contact the outer peripheral surfaces of the screw shaft to thereby seal a lubricant inside the nut. Furthermore, by forming the slit on the seal member, an edge portion of the slit contacting the outer peripheral surface of the screw shaft scrapes off foreign bodies adhering to the screw shaft and discharges the foreign bodies outside the nut, thus preventing the foreign bodies from invading inside the nut.

However, in the conventional seal structure described above, the lubricant inside the nut easily invades into a gap between the screw shaft and the seal members and there is a fear that the lubricant leaks outside the nut. Moreover, the lubricant will be also scraped off as well as the foreign bodies by the edge portion of the slit, and for this reason, the scraped lubricant is discharged outside the nut and not returned to the inside of the nut.

The closest prior art document EP-A-0376164 describes a ball screw comprising a screw shaft formed, on an outer peripheral surface thereof, with a ball rolling groove, a number of balls rolling along said ball rolling groove, a nut screwed with said screw shaft through the balls and seal members disposed at both end portions of the nut, each of said seal members being formed, on an inner peripheral surface thereof, with a spiral projection to be fitted into said ball rolling groove,
wherein a lubricant retaining portion is formed on the seal member from an end surface thereof facing inside in the axial direction of the nut, and said lubricant retaining portion comprises a slit, and wherein the lubricant retaining portion positively traps lubricant invading into the gap between the seal member and the screw shaft through the end surface and returns the lubricant to the inside of the nut, and in that the slit of the lubricant retaining portion extends from said end surface of the seal member to an intermediate portion thereof.
and wherein a foreign bodies removing portion is formed on the seal member to remove foreign bodies adhering to an outer peripheral surface of the screw shaft and discharge the foreign bodies outside the nut.

The present invention seeks to provide a ball screw having a seal member capable of effectively maintaining a lubricant inside a nut and preventing foreign bodies from invading inside the nut.

According to the present invention, a ball screw as defined above is characterised in that the foreign bodies removing portion is a slit formed on the seal member so as to extend from an end face thereof facing outside in the axial direction of the nut to an intermediate portion thereof.

In a ball screw of the invention the lubricant retaining portion is formed on the seal member from an end surface thereof facing inside in the axial direction of the nut to an intermediate portion thereof. Therefore the lubricant invading into the gap between the seal member and the screw shaft through the end surface can be positively trapped and returned to the inside portion of the nut. Thus, the lubricant inside the nut can be prevented from leaking out of the nut. As the lubricant retaining portion comprises a slit, the lubricant is scraped off by the edge portion of a side surface of the slit on contact with the screw shaft and returned inside the nut.

Furthermore, as a foreign bodies removing portion is formed on the seal member from an end surface thereof facing outside in the axial direction of the nut to an intermediate portion thereof, foreign bodies storing on the outer peripheral surface of the screw shaft (including a surface of the ball rolling groove) are removed and discharged out of the nut. The foreign bodies removing portion is formed as a slit, and foreign bodies are scraped off by the edge portion of a side surface of the slit and discharged out of the nut.

In an embodiment, pressing means for pressing the seal members against the screw shaft are provided. The pressing means ensure that the lubricant retaining portion and the foreign bodies removing portion are tightly in contact with the screw shaft. Therefore, the lubricant can be surely trapped and the foreign bodies can be removed.

Embodiments of the present invention will hereinafter be described, by way of example, with reference to the accompanying drawings, in which:
Figure 1 shows a plan view of a nut and seal members of a ball screw of an embodiment of the invention;
Figure 2 shows an end view of Figure 1;
Figure 3 shows a sectional view of Figure 1;
Figure 4 shows an end view of a seal member;
Figure 5 shows a sectional view of the seal member;
Figure 6 shows a side view of a ring to which a spring is mounted; and
Figure 7 shows a sectional view showing a screw shaft and the seal member.

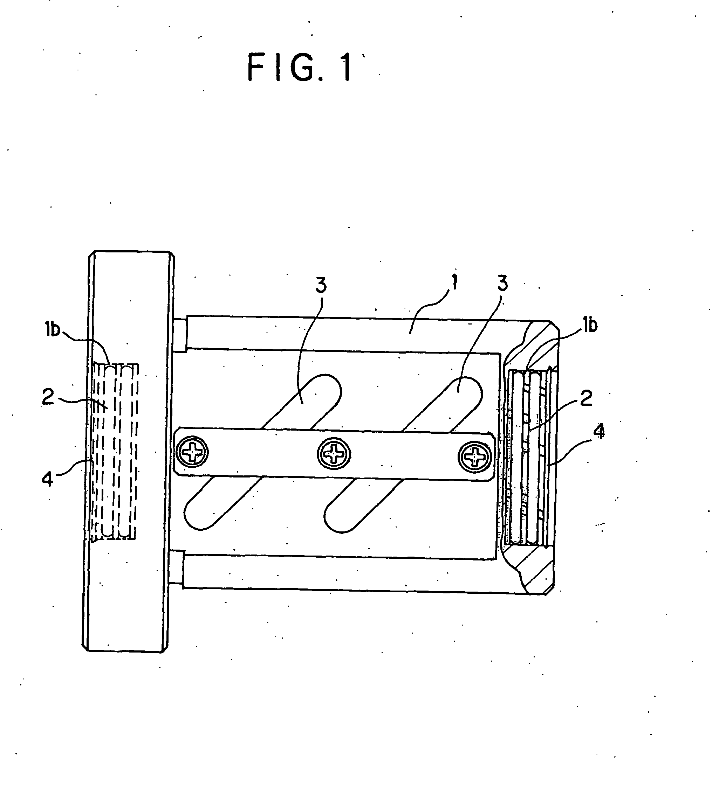

Figures 1 to 3 represent a ball screw having a ball screw nut 1 and seal members 2. As is known, the ball screw comprises a screw shaft (not shown) having an outer peripheral surface on which a spiral ball rolling groove is formed, The nut 1 has an inner peripheral surface on which a spiral ball rolling groove 1a, opposed to the ball rolling groove formed on the screw shaft, is formed. A number of balls (not shown) are arranged and accommodated between the ball rolling grove 1a of the nut 1 and the ball rolling groove of the screw shaft. When the screw shaft is rotated, the balls roll in the space between the ball rolling groove 1a of the nut 1 and the ball rolling groove of the screw shaft. When a ball reaches one end portion of the ball rolling groove 1a of the nut 1 it returns to an opposite side of the ball rolling groove 1a through a return tube 3 fixed to the nut 1. The nut 1 carries out a linear motion along the screw shaft by the rotation thereof.

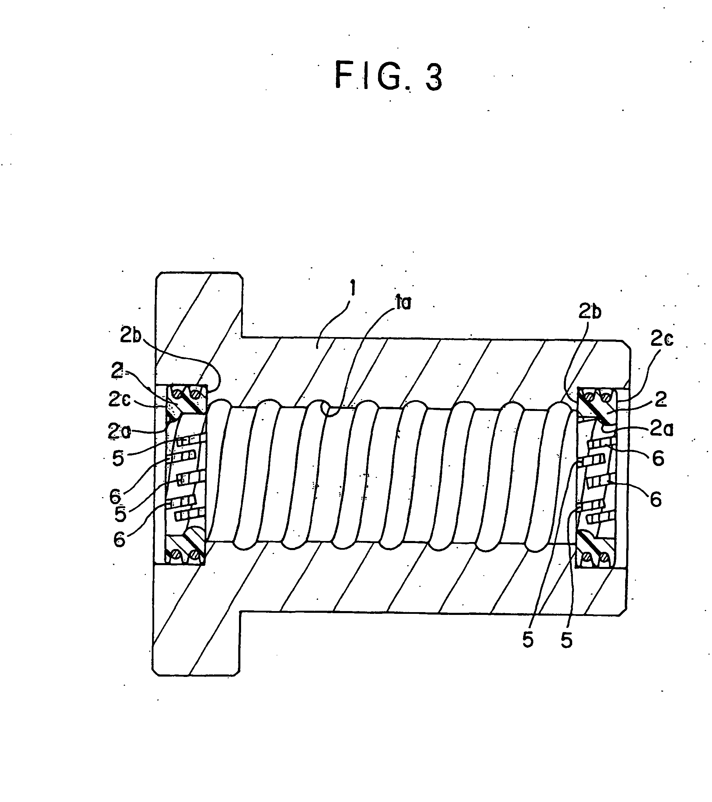

A pair of seal member mounting bores 1b are formed at respective axial end portions of the nut 1. A ring-shaped seal member 2 is mounted in each of the seal member mounting bores 1b and is fastened therein by means of snap ring 4. Each seal member 2 is produced through an injection molding of a synthetic resin or through a cutting working, and a spiral projection 2a is formed on the inner peripheral surface of the seal member 2 which is to be fitted into the ball rolling groove of the screw shaft (see Figure 3).

As shown in Figure 3, a plurality of slits 5 for retaining lubricant are formed on the seal member 2 so as to each extend from an end surface 2b thereof facing inside in the axial direction of the nut 1 towards an intermediate portion of the seal member 2. A plurality of slits for removing foreign bodies are formed on the seal member 2 so as to each extend from an end face 2c thereof facing outside in the axial direction of the nut towards an intermediate portion of the seal member 2. The lubricant retaining slits 5 can prevent lubricant (grease, for example), which fills the inner portion of the nut 1, from leaking outward. The foreign bodies removing slits 6 can prevent foreign bodies from invading the nut 1 from outside.

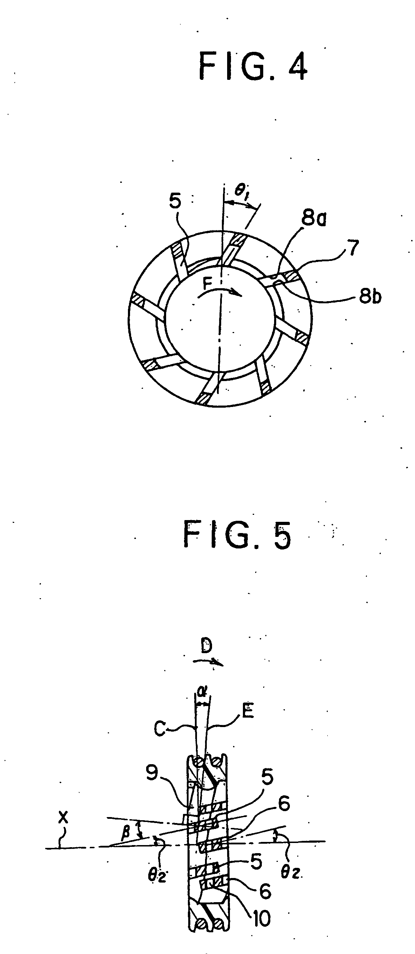

Figure 4 shows an end view of the seal and illustrates the arrangement of the lubricant retaining slits 5. The lubricant retaining slits 5 each extend substantially in a radial direction of the screw shaft so as to penetrate the seal member 2 as holes from its inner periphery to its outer periphery. Further, in Figure 4, oblique line portions represent springs 12a and 12b described below. As shown, the lubricant retaining slits 5 are formed on eight portions of the seal member 2 with equal distance between adjacent ones in the circumferential direction. The eight lubricant retaining slits 5 are formed so as to each have an inclination e 1 in the rotation direction F of the screw shaft and to be gradually displaced in the direction of arrow F from the inner periphery of the screw shaft towards the outer periphery thereof.

The inclined formation of the lubricant retaining slits 5, enables one of opposing side surfaces 8a and 8b of each slit 5 to act as a lubricant retaining scraper surface having an edge portion for scraping off the lubricant. The number of the lubricant retaining slits 5 may be selected as required.

Figure 5 shows a sectional view of the seal member 2. The lubricant retaining slits 5 are formed so as to each have an inclination θ2 relative to the direction of an axis X of the nut 1. That is, in a case where the centre line E of the ball rolling groove 9 is inclined at a lead angle of α, in a predetermined deflected direction D with respect to the direction (direction of auxiliary line C) normal to the direction of the axis X of the nut 1, the centre line of the lubricant retaining slit 5 is included at the predetermined angle θ2 in a direction reverse to the direction D with respect to the axis X of the nut 1. The lubricant retaining scraper surface 8b is inclined at an angle of β from a surface normal to the centre line E of the ball rolling groove 9 so as to displace the scraped lubricant in the axial direction X of the nut and return the lubricant inside the nut 1. The eight lubricant retaining slits 5 are all formed at an inclination θ2 with respect to the axis X of the nut 1.

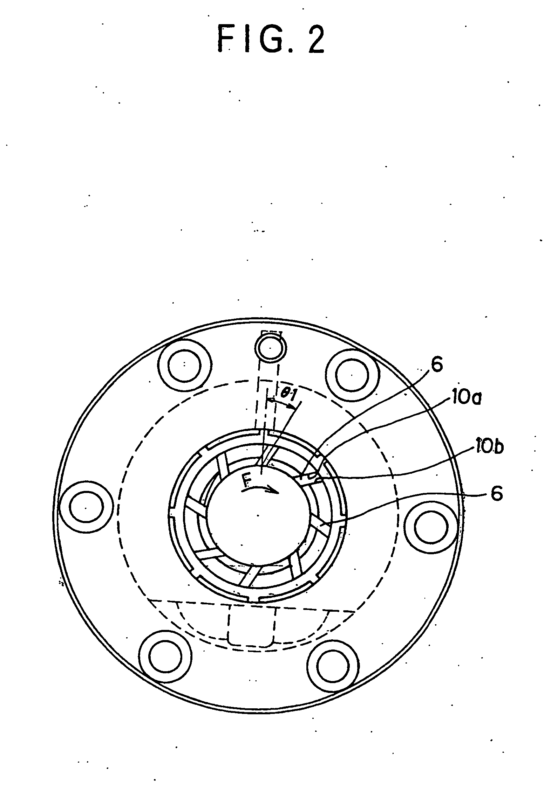

The foreign bodies removing slits 6 extend substantially in a radial direction of the screw shaft so as to penetrate the seal member 2 as holes from its inner periphery to its outer periphery (see Figure 2). In the illustrated embodiment, these foreign bodies removing slits 6 are also formed on eight portions of the seal member 2 with equal distance between adjacent ones in the circumferential direction. Each foreign bodies removing slit 6 has an inclination θ1 in the rotating direction F of the screw shaft with respect to the radial direction of the screw shaft. One of opposing surfaces 10a and 10b of each of the slits 6 acts as a foreign bodies removing surface having an edge portion for scraping off the foreign bodies.

As shown in Figure 5, the foreign bodies removing slits 6 are formed so as to each have an inclination θ2 with respect to the direction of the axis X of the nut 1. That is, in a case where the centre line E of the ball rolling groove 9 is inclined, at a lead angle of α, in a predetermined deflected direction D with respect to the direction (direction of auxiliary line C) normal to the direction of the axis X of the nut 1, the centre line of the foreign bodies removing slit 6 is inclined at the predetermined angle θ2 in the direction reverse to the direction D with respect to the axis X of the nut 1. The foreign bodies removing scraper surface 10b is inclined at an angle of β from a surface normal to the centre line E of the ball rolling groove 9 so as to displace the scraped foreign bodies in the axial direction X of the nut and discharge them outside the nut 1.

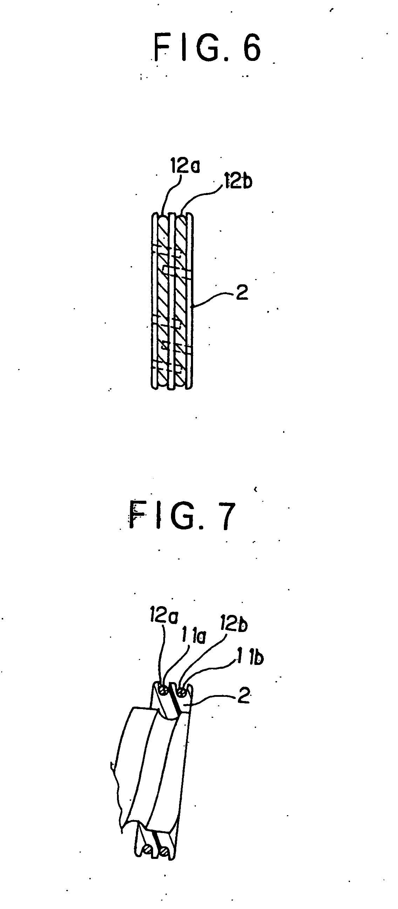

As is shown in Figures 6 and 7, each seal member 2 is formed with two grooves 11a and 11b in its outer peripheral surface which each extend in the circumferential direction thereof. A respective spring 12a, 12b is wound around each one of the grooves 11a, 11b. By winding springs 12a and 12b around the outer peripheries of the seal members 2, an elastic property is imparted to each seal member 2. The flexible elastic seal member 2 can be tightly fitted to the screw shaft to thereby improve the sealing performance. In addition, the edge portions of the lubricant retaining scraping surface 8b and the foreign bodies removing scraping surface 10b can be urged into sure contact with the screw shaft to thereby reliably scrape off the lubricant and the foreign bodies. The number of grooves, as 11a and 11b extending in the circumferential direction of each seal member 2 is not limited to two and may be selected as required. In one example, only a single groove is provided in each seal member.

The lubricant scraping function and the foreign bodies removing function of the seal members 2 will now be described in the case where the screw shaft is rotated in the direction F shown in Figures 2 and 4.

When the ball screw is rotated in the direction F in Figure 2 or 4, the edge portion of the scraper surface 8b of each lubricant retaining slit 5 of the seal member 2 will slide in contact with the outer peripheral surface of the screw shaft. For this reason, the lubricant adhering to the outer peripheral surface of the screw shaft will be scraped off by the edge portion of the scraper surface 8b of the lubricant retaining slit 5 and scraped on the scraping surface 8b thereof. Since this scraping surface 8b of the lubricant retaining slit is inclined at an angle of β with respect to the direction normal to the centre line E of the ball rolling groove 9, the lubricant is returned to the inside of the nut 1. Accordingly, lubricant invading from the end surface 2b of the seal member 2 into the gap between the nut 1 and the screw shaft can be positively trapped and returned again to the inside of the nut 1. Further, in the case where the ball screw is rotated in the direction reverse to the direction F in Figure 2 or 4, the lubricant can be sealed at the end surface 2b of the seal member 2 as in the case of no formation of a lubricant removing slit (see Figure 3).

Similarly, when the screw shaft is rotated in the direction F in Figure 2 or 4, the edge portion of the scraper surface 10b of the foreign bodies removing slit 6 slides on the outer peripheral surface of the screw shaft in contact therewith. Accordingly, foreign bodies adhering to the outer peripheral surface of the screw shaft can be scraped off and the scraped foreign bodies are then scraped on the scraper surface 10b for removing the foreign bodies. Further, since this scraper surface 10b has an inclination β to a direction normal to the centre line E of the ball rolling groove 9, the scraped foreign bodies are discharged out of the nut 1.

As explained above, in embodiments of the invention, each of the lubricant retaining portions is formed on the seal member from an end surface of the seal member facing inside in the axial direction of the nut to an intermediate portion thereof. Similarly, each of the foreign bodies removing portions is formed on the seal member from an end surface of the seal member facing outside in the axial direction of the nut to the intermediate portion thereof. By these means, lubricant invading into the gap between the seal member and the screw shaft through the end surface of the seal member can be positively trapped and returned to the inside of the nut, and foreign bodies remaining on the outer peripheral surface of the screw shaft can be removed and discharged outside. Therefore, the lubricant can be retained in the inside portion of the nut and the foreign bodies can be prevented from entering inside the nut.

## Claims

1. A ball screw comprising a screw shaft formed, on an outer peripheral surface thereof, with a ball rolling groove, a number of balls rolling along said ball rolling groove, a nut (1) screwed with said screw shaft through the balls and seal members (2) disposed at both end portions of the nut, each of said seal members being formed, on an inner peripheral surface thereof, with a spiral projection (2a) to be fitted into said ball rolling groove,
wherein a lubricant retaining portion (5) is formed on the seal member (2) from an end surface thereof (2b) facing inside in the axial direction of the nut, and said lubricant retaining portion comprises a slit (5), and wherein the lubricant retaining portion positively traps lubricant invading into the gap between the seal member and the screw shaft through the end surface and returns the lubricant to the inside of the nut (1), and in that the slit (5) of the lubricant retaining portion extends from said end surface (2b) of the seal member (2) to an intermediate portion thereof.
and wherein a foreign bodies removing portion (6) is formed on the seal member to remove foreign bodies adhering to an outer peripheral surface of the screw shaft, and discharge the foreign bodies outside the nut,
**characterised in that** the foreign bodies removing portion is a slit (6) formed on the seal member (2) so as to extend from an end face (2c) thereof facing outside in the axial direction of the nut to an intermediate portion thereof.

2. A ball screw as claimed in Claim 1, wherein pressing means (12a, 12b) for pressing said seal member against the screw shaft are provided.

3. A ball screw as claimed in Claim 1 or Claim 2, wherein said slit (5) of the lubricant retaining portion penetrates the seal member (2) from an inner peripheral portion to an outer peripheral portion thereof.

4. A ball screw as claimed in any preceding claim, wherein said slit (6) of the foreign bodies removing portion penetrates the seal member (2) from an inner peripheral portion to an outer peripheral portion thereof.

5. A ball screw as claimed in any preceding claim, wherein a lubricant retaining scraper surface (8b) having an edge portion for scraping off lubricant is formed at one of opposing side surfaces of the slit (5) of the lubricant retaining portion, and the lubricant retaining scraper surface (8b) is formed to have an inclination (θ1) in a rotating direction of the screw shaft and to have an inclination (θ2) with respect to a direction of an axis of the nut so as to displace the scraped lubricant in the axial direction of the nut and return the lubricant inside the nut.

6. A ball screw as claimed in any preceding claim, wherein the lubricant retaining portion has a plurality of slits (5), and one of opposing side surfaces (8a, 8b) of each slit (5) acts as a lubricant retaining scraper surface having an edge portion for scraping off the lubricant.

7. A ball screw as claimed in Claim 6, wherein the lubricant retaining slits (5) are formed so as to each have an inclination (θ2) relative to the axial direction of the nut (1).

8. A ball screw as claimed in any preceding claim, wherein the foreign bodies removing portion (6) has a plurality of slits (6), and one of opposing surfaces (10a, 10b) of each slit (6) acts as a foreign bodies removing surface having an edge portion for scraping off the foreign bodies.

9. A ball screw as claimed in Claim 8, wherein the foreign bodies removing slits (6) are formed so as to each have an inclination (θ2) with respect to the axial direction of the nut.

## Patentansprüche

1. Kugelspindel mit einer Spindelwelle, an der an einer äußeren Umfangsfläche eine Kugelrollnut ausgebildet ist, einer Anzahl von Kugeln, die entlang der Kugelrollnut rollen, einer Mutter (1), die mit der Spindelwelle über die Kugeln und Dichtungselemente (2), die an beiden Endabschnitten der Mutter angeordnet sind, verschraubt ist, wobei jedes der Dichtungselemente an einer inneren Umfangsfläche mit einem spiralförmigen Vorsprung (2a) ausgebildet ist, der in die Kugelrollnut einpassbar ist,
wobei ein Schmiermittel zurückhaltender Abschnitt (5) an dem Dichtungselement (2) ausgehend von einer in axialer Richtung der Mutter nach innen weisenden Endfläche desselben (2b) gebildet ist, und der Schmiermittel zurückhaltende Abschnitt einen Schlitz (5) aufweist, und wobei der Schmiermittel zurückhaltende Abschnitt formschlüssig Schmiermittel auffängt, das in den Spalt zwischen dem Dichtungselement und der Spindelwelle durch die Endfläche dringt und das Schmiermittel in das Innere der Mutter (1) zurückführt,
und dass der Schlitz (5) des Schmiermittel zurückhaltenden Abschnitts sich von der Endfläche (2b) des Dichtungselements (2) zu einem Zwischenabschnitt desselben erstreckt,
und wobei ein Fremdkörper entfernender Abschnitt (6) an dem Dichtungselement gebildet ist, um Fremdkörper, die an einer äußeren Umfangsfläche der Spindelwelle haften, zu entfernen und die Fremdkörper nach außerhalb der Mutter abzuführen,
**dadurch gekennzeichnet, dass** der die Fremdkörper entfernende Abschnitt ein Schlitz (6) ist, der an dem Dichtungselement (2) gebildet ist, so dass er sich von einer in axialer Richtung der Mutter nach außen weisenden Endfläche (2c) desselben zu einem Zwischenabschnitt desselben erstreckt.

2. Kugelspindel nach Anspruch 1, wobei Presseinrichtungen (12a, 12b) zum Anpressen des Dichtungselements an die Spindelwelle vorgesehen sind.

3. Kugelspindel nach Anspruch 1 oder 2, wobei der Schlitz (5) des Schmiermittel zurückhaltenden Abschnitts das Dichtungselement (2) von einem inneren Umfangsabschnitt zu einem äußeren Umfangsabschnitt durchdringt.

4. Kugelspindel nach einem der vorhergehenden Ansprüche, wobei der Schlitz (6) des Fremdkörper entfernenden Abschnitts das Dichtungselement (2) von einem inneren Umfangsabschnitt zu einem äußeren Umfangsabschnitt durchdringt.

5. Kugelspindel nach einem der vorhergehenden Ansprüche, wobei eine Schmiermittel zurückhaltende Abstreiffläche (8b) mit einem Randabschnitt zum Abstreifen von Schmiermittel an einer von einander gegenüberliegenden Seitenflächen des Schlitzes (5) des Schmiermittel zurückhaltenden Abschnitts gebildet ist und die Schmiermittel zurückhaltende Abstreiffläche (8b) so gebildet ist, dass sie eine Neigung (θ1) in eine Drehrichtung der Spindelwelle aufweist und eine Neigung (θ2) in Bezug auf eine Richtung einer Achse der Mutter aufweist, so dass sie das abgestreifte Schmiermittel in axialer Richtung der Mutter verschiebt und das Schmiermittel in die Mutter zurückführt.

6. Kugelspindel nach einem der vorhergehenden Ansprüche, wobei der Schmiermittel zurückhaltende Abschnitt eine Mehrzahl von Schlitzen (5) hat und eine der gegenüberliegenden Seitenflächen (8a, 8b) jedes Schlitzes (5) als eine Schmiermittel zurückhaltende Abstreiffläche wirkt, die einen Randabschnitt hat, um das Schmiermittel abzustreifen.

7. Kugelspindel nach Anspruch 6, wobei die Schmiermittel zurückhaltenden Schlitze (5) so gebildet sind, dass sie jeweils eine Neigung (θ2) relativ zur axialen Richtung der Mutter (1) haben.

8. Kugelspindel nach einem der vorhergehenden Ansprüche, wobei der Fremdkörper entfernende Abschnitt (6) eine Mehrzahl von Schlitzen (6) hat und eine der einander gegenüberliegenden Oberflächen (10a, 10b) jedes Schlitzes (6) als Fremdkörper entfernende Oberfläche wirkt, die einen Randabschnitt hat, um die Fremdkörper abzustreifen.

9. Kugelspindel nach Anspruch 8, wobei die Fremdkörper entfernenden Schlitze (6) so gebildet sind, dass sie jeweils eine Neigung (θ2) in Bezug auf die axiale Richtung der Mutter haben.

## Revendications

1. Vis à billes comportant un arbre fileté muni, sur une surface périphérique extérieure de celui-ci, d'une gorge de roulement de billes, plusieurs billes roulant le long de ladite gorge de roulement de billes, un écrou (1) vissé avec ledit arbre fileté par l'intermédiaire des billes et des éléments d'étanchéité (2) disposés aux deux parties d'extrémité de l'écrou, chacun desdits éléments d'étanchéité étant muni, sur une surface périphérique intérieure de celui-ci, d'une saillie en spirale (2a) destinée à être ajustée dans ladite gorge de roulement de billes,
dans laquelle une partie de retenue de lubrifiant (5) est formée sur l'élément d'étanchéité (2) à partir d'une surface d'extrémité de celui-ci (2b) dirigée vers l'intérieur dans la direction axiale de l'écrou, et ladite partie de retenue de lubrifiant comporte une fente (5), dans lequel la partie de retenue de lubrifiant piège de manière positive du lubrifiant entrant dans l'espace existant entre l'élément d'étanchéité et l'arbre fileté à travers la surface d'extrémité et renvoie le lubrifiant vers l'intérieur de l'écrou (1), et en ce que la fente (5) de la partie de retenue de lubrifiant s'étend depuis ladite surface d'extrémité (2b) de l'élément d'étanchéité (2) jusqu'à une partie intermédiaire de celui-ci,
et dans laquelle une partie d'enlèvement de corps étrangers (6) est formée sur l'élément d'étanchéité pour enlever des corps étrangers collant sur une surface périphérique extérieure de l'arbre fileté, et évacue les corps étrangers à l'extérieur de l'écrou,
**caractérisée en ce que** la partie d'enlèvement de corps étrangers est une fente (6) formée sur l'élément d'étanchéité (2) de manière à s'étendre depuis une face d'extrémité (2c) de celui-ci dirigée vers l'extérieur dans la direction axiale de l'écrou jusqu'à une partie intermédiaire de celui-ci.

2. Vis à billes selon la revendication 1, dans laquelle sont fournis des moyens d'appui (12a, 12b) destinés à appuyer ledit élément d'étanchéité contre l'arbre fileté.

3. Vis à billes selon la revendication 1 ou 2, dans laquelle ladite fente (5) de la partie de retenue de lubrifiant pénètre dans l'élément d'étanchéité (2) depuis une partie périphérique intérieure jusqu'à une partie périphérique extérieure de celui-ci.

4. Vis à billes selon l'une quelconque des revendications précédentes, dans laquelle ladite fente (6) de la partie d'enlèvement de corps étrangers pénètre dans l'élément d'étanchéité (2) à partir d'une partie périphérique intérieure jusqu'à une partie périphérique extérieure de celui-ci.

5. Vis à billes selon l'une quelconque des revendications précédentes, dans laquelle une surface de raclage retenant du lubrifiant (8b), ayant une partie de bord destinée à racler du lubrifiant est formée au niveau de l'une des surfaces latérales opposées de la fente (5) de la partie de retenue de lubrifiant, et la surface de raclage retenant du lubrifiant (8b) est formée pour avoir une inclinaison (θ1) dans le sens de rotation de l'arbre fileté et pour avoir une inclinaison (θ2) par rapport à la direction d'un axe de l'écrou de manière à déplacer le lubrifiant raclé dans la direction axiale de l'écrou et ramener le lubrifiant à l'intérieur de l'écrou.

6. Vis à billes selon l'une quelconque des revendications précédentes, dans laquelle la partie de retenue de lubrifiant a une pluralité de fentes (5) et une des surfaces latérales opposées (8a, 8b) de chaque fente (5) agit comme une surface de raclage retenant du lubrifiant ayant une partie de bord pour racler le lubrifiant.

7. Vis à billes selon la revendication 6, dans laquelle les fentes de retenue de lubrifiant (5) sont formées de manière à avoir chacune une inclinaison (θ2) par rapport à la direction axiale de l'écrou (1).

8. Vis à billes selon l'une quelconque des revendications précédentes, dans laquelle la partie d'enlèvement de corps étrangers (6) a une pluralité de fentes (6) et une des surfaces opposées (10a, 10b) de chaque fente (6) agit comme une surface d'enlèvement de corps étrangers ayant une partie de bord pour racler les corps étrangers.

9. Vis à billes selon la revendication 8, dans laquelle les fentes d'enlèvement de corps étrangers (6) sont formées de manière à avoir chacune une inclinaison (θ2) par rapport à la direction axiale de l'écrou.
